# EUROPEAN PATENT APPLICATION

(11) **EP 3 357 890 A1**
(43) Date of publication of application: **08.08.2018**
(21) Application number: 16851670.6
(22) Date of filing: 28.09.2016
(51) Int. Cl.: C03C 27/12, B32B 17/10, B32B 27/30, C08K 5/521, C08K 5/541, C08L 29/14

(54) **INTERLAYER FILM FOR LAMINATED GLASS, AND LAMINATED GLASS**

(30) Priority: 28.09.2015 JP 2015189938
(71) Applicant: Sekisui Chemical Co., Ltd., Osaka-shi, Osaka 530-8565 (JP)
(72) Inventor: YOSHIDA, Shougo, Kouka-shi Shiga 528-8585 (JP); OOTA, Yuusuke, Kouka-shi Shiga 528-8585 (JP); YAMAMOTO, Masaki, Kouka-shi Shiga 528-8585 (JP); II, Daizou, Kouka-shi Shiga 528-8585 (JP)
(74) Representative: Ter Meer Steinmeister & Partner
(86) International application number: PCT/JP2016/078693
(87) International publication number: WO 2017/057499

(57) **Abstract**

There is provided an interlayer film for laminated glass with which the haze value of laminated glass can be lowered and the releasability of a lamination glass member from the interlayer film can be made moderately high. The interlayer film for laminated glass according to the present invention is a single-layered interlayer film provided with only a first layer or is a multi-layered interlayer film provided with a first layer and another layer, the first layer contains no magnesium or contains magnesium in a content of 50 ppm or less and the first layer contains a phosphorus compound having a polyoxyalkylene group or a silane compound having a polyoxyalkylene group, the first layer contains heat shielding particles in the case of the interlayer film provided with only the first layer, and at least one layer in the interlayer film contains heat shielding particles in the case of the interlayer film provided with the first layer and another layer.

## Description

### TECHNICAL FIELD

The present invention relates to an interlayer film for laminated glass which is used for laminated glass. Moreover, the present invention relates to laminated glass prepared with the interlayer film for laminated glass.

### BACKGROUND ART

Since laminated glass generates only a small amount of scattering glass fragments even when subjected to external impact and broken, laminated glass is excellent in safety. As such, the laminated glass is widely used for automobiles, railway vehicles, aircraft, ships, buildings, and the like. The laminated glass is produced by sandwiching an interlayer film for laminated glass between a pair of glass plates.

As an example of the interlayer film for laminated glass, the following Patent Document 1 discloses an interlayer film formed of a resin composition containing a near infrared ray absorber, an oxidation inhibitor, and a resin. The near infrared ray absorber is constituted of particles of a specific phosphonic acid copper salt. The oxidation inhibitor is at least one kind of oxidation inhibitor selected from a hindered phenol-based oxidation inhibitor and a specific phosphorus-based oxidation inhibitor.

Moreover, the following Patent Document 2 discloses a sound insulating layer including 100 parts by weight of a polyvinyl acetal resin with an acetalization degree of 60 to 85% by mole, 0.001 to 1.0 part by weight of at least one kind of metal salt among an alkali metal salt and an alkaline earth metal salt, and a plasticizer in an amount more than 30 parts by weight. This sound insulating layer can be used alone as a single-layered interlayer film.

The following Patent Document 2 also describes a multi-layered interlayer film in which the sound insulating layer and another layer are layered. Another layer to be layered with the sound insulating layer includes 100 parts by weight of a polyvinyl acetal resin with an acetalization degree of 60 to 85% by mole, 0.001 to 1.0 part by weight of at least one kind of metal salt among an alkali metal salt and an alkaline earth metal salt, and a plasticizer in an amount of 30 parts by weight or less.

### Related Art Documents

### Patent Documents

Patent Document 1: WO 2014/027639 A1
Patent Document 2: JP 2007-070200 A

### SUMMARY OF THE INVENTION

### PROBLEMS TO BE SOLVED BY THE INVENTION

Under a situation that a stone and the like can collide with the laminated glass, it is preferred that a lamination glass member be released from the interlayer film to a moderately sufficient degree. By releasing the lamination glass member, the interlayer film can be prevented from breaking. There are cases where a conventional interlayer film is too low in releasability of a lamination glass member from the interlayer film. Moreover, when the interlayer film contains tin-doped indium oxide particles, tungsten oxide particles, and the like, it is difficult to make the releasability of a lamination glass member from the interlayer film moderately high.

An object of the present invention is to provide an interlayer film for laminated glass with which the haze value of laminated glass can be lowered and the releasability of a lamination glass member from the interlayer film can be made moderately high. Moreover, the present invention is also aimed at providing laminated glass prepared with the above-mentioned interlayer film for laminated glass.

### MEANS FOR SOLVING THE PROBLEMS

According to a broad aspect of the present invention, there is provided an interlayer film for laminated glass (hereinafter, sometimes abbreviated as an interlayer film) being a single-layered interlayer film provided with only a first layer or being a multi-layered interlayer film provided with a first layer and another layer, the first layer containing no magnesium or containing magnesium in a content of 50 ppm or less and the first layer containing a phosphorus compound having a polyoxyalkylene group or a silane compound having a polyoxyalkylene group, when the interlayer film for laminated glass is a single-layered interlayer film provided with only the first layer, the first layer containing heat shielding particles, and when the interlayer film for laminated glass is a multi-layered interlayer film provided with the first layer and another layer, at least one layer in the multi-layered interlayer film containing heat shielding particles.

In a specific aspect of the interlayer film according to the present invention, the first layer contains heat shielding particles.

In a specific aspect of the interlayer film according to the present invention, the first layer contains no alkali metal or contains an alkali metal in a content of 1000 ppm or less.

In a specific aspect of the interlayer film according to the present invention, the first layer contains a thermoplastic resin.

In a specific aspect of the interlayer film according to the present invention, the thermoplastic resin contained in the first layer is a polyvinyl acetal resin.

In a specific aspect of the interlayer film according to the present invention, the first layer contains a plasticizer.

In a specific aspect of the interlayer film according to the present invention, the phosphorus compound having a polyoxyalkylene group is a phosphorus compound having a polyoxyalkylene group and an alkyl group bonded to a polyoxyalkylene group or the silane compound having a polyoxyalkylene group is a silane compound having a polyoxyalkylene group and an alkyl group bonded to a polyoxyalkylene group.

In a specific aspect of the interlayer film according to the present invention, the phosphorus compound having a polyoxyalkylene group is a phosphoric acid ester having a polyoxyalkylene group.

In a specific aspect of the interlayer film according to the present invention, the silane compound having a polyoxyalkylene group is a silsesquioxane having a polyoxyalkylene group.

In a specific aspect of the interlayer film according to the present invention, the first layer contains a phosphorus compound having the polyoxyalkylene group.

In a specific aspect of the interlayer film according to the present invention, the interlayer film is provided with the first layer as a surface layer of the interlayer film.

In a specific aspect of the interlayer film according to the present invention, the interlayer film is an interlayer film for laminated glass having a two or more-layer structure and is further provided with a second layer containing a thermoplastic resin, and the first layer is arranged on a first surface side of the second layer.

In a specific aspect of the interlayer film according to the present invention, the interlayer film is an interlayer film for laminated glass having a three or more-layer structure and is further provided with a third layer containing a thermoplastic resin, and the third layer is arranged on a second surface side opposite to the first surface side of the second layer.

According to a broad aspect of the present invention, there is provided laminated glass including a first lamination glass member, a second lamination glass member, and the above-described interlayer film for laminated glass, the interlayer film for laminated glass being arranged between the first lamination glass member and the second lamination glass member.

### EFFECT OF THE INVENTION

Since the interlayer film for laminated glass according to the present invention is a single-layered interlayer film provided with only a first layer or is a multi-layered interlayer film provided with a first layer and another layer, the first layer contains no magnesium or contains magnesium in a content of 50 ppm or less and the first layer contains a phosphorus compound having a polyoxyalkylene group or a silane compound having a polyoxyalkylene group, the first layer contains heat shielding particles in the case of the single-layered interlayer film provided with only the first layer, and at least one layer in the multi-layered interlayer film contains heat shielding particles in the case of the multi-layered interlayer film provided with the first layer and another layer, the haze value can be lowered in laminated glass prepared with the interlayer film and the releasability of a lamination glass member from the interlayer film can be made moderately high.

### BRIEF DESCRIPTION OF DRAWINGS

[Fig. 1] Fig. 1 is a sectional view schematically showing an interlayer film for laminated glass in accordance with a first embodiment of the present invention.
[Fig. 2] Fig. 2 is a sectional view schematically showing an interlayer film for laminated glass in accordance with a second embodiment of the present invention.
[Fig. 3] Fig. 3 is a sectional view schematically showing an example of laminated glass prepared with the interlayer film for laminated glass shown in Fig. 1.
[Fig. 4] Fig. 4 is a sectional view schematically showing an example of laminated glass prepared with the interlayer film for laminated glass shown in Fig. 2.

### MODE(S) FOR CARRYING OUT THE INVENTION

Hereinafter, the present invention will be described in detail.

The interlayer film for laminated glass (hereinafter, sometimes abbreviated as the interlayer film) according to the present invention has a one-layer structure or a two or more-layer structure. The interlayer film according to the present invention may have a one-layer structure and may have a two or more-layer structure. The interlayer film according to the present invention is provided with a first layer. The interlayer film for laminated glass according to the present invention is a single-layered interlayer film provided with only a first layer or is a multi-layered interlayer film provided with a first layer and another layer. The first layer in the present invention contains no magnesium or contains magnesium in a content of 50 ppm or less. The first layer in the present invention contains a phosphorus compound having a polyoxyalkylene group or a silane compound having a polyoxyalkylene group.

When the interlayer film according to the present invention is a single-layered interlayer film provided with only the first layer, the first layer contains heat shielding particles. When the interlayer film according to the present invention is a multi-layered interlayer film provided with the first layer and another layer, at least one layer in the multi-layered interlayer film contains heat shielding particles. Accordingly, the interlayer film according to the present invention contains heat shielding particles.

Since the interlayer film according to the present invention is provided with the above-mentioned configuration, the haze value of laminated glass can be lowered and the releasability of a lamination glass member from the interlayer film can be made moderately high. Under a situation that a stone and the like can collide with the laminated glass, it is preferred that a lamination glass member be released from the interlayer film to a moderately sufficient degree. In the present invention, the releasability becomes satisfactory in such a case. Moreover, when an interlayer film contains heat shielding particles, it is difficult to make the releasability of a lamination glass member from the interlayer film moderately high. In the present invention, even if an interlayer film contains heat shielding particles, the releasability of a lamination glass member from the interlayer film can be made moderately high.

The interlayer film according to the present invention may be a single-layered interlayer film provided with only a first layer and may be a multi-layered interlayer film provided with a first layer and another layer. The interlayer film according to the present invention may have a two-layer structure, may have a two or more-layer structure, and may have a three or more-layer structure.

The interlayer film may have a two or more-layer structure and may be provided with a second layer in addition to a first layer. The interlayer film may be provided with a second layer as another layer mentioned above. It is preferred that the interlayer film be further provided with a second layer containing a thermoplastic resin. When the interlayer film is provided with the second layer, the first layer is arranged on a first surface side of the second layer.

The interlayer film may have a three or more-layer structure and may be provided with a third layer in addition to a first layer and a second layer. The interlayer film may be provided with a second layer as another layer mentioned above and a third layer as another layer mentioned above. It is preferred that the interlayer film be further provided with a third layer containing a thermoplastic resin. When the interlayer film is provided with the second layer and the third layer, the third layer is arranged on a second surface side opposite to the first surface side of the second layer.

From the viewpoint of effectively enhancing the releasability, it is preferred that the interlayer film be provided with the first layer as a surface layer of the interlayer film. The interlayer film may be provided with the second layer as a surface layer of the interlayer film. It is preferred that the interlayer film be provided with the third layer as a surface layer of the interlayer film. It is preferred that the interlayer film be provided with the first layer as a surface layer of the interlayer film and the third layer as a surface layer of the interlayer film, respectively.

It is preferred that a surface at a side opposite to the second layer side of the first layer be a surface on which a lamination glass member is layered. A surface (second surface) at a side opposite to the first layer side of the second layer may be a surface on which a lamination glass member is layered. It is preferred that a surface at a side opposite to the second layer side of the third layer be a surface on which a lamination glass member is layered.

Hereinafter, specific embodiments of the present invention will be described with reference to the drawings.

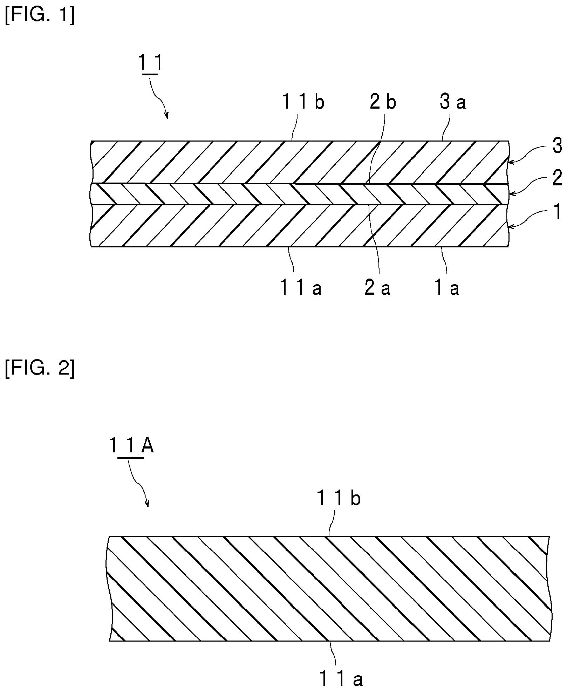

Fig. 1 is a sectional view schematically showing an interlayer film for laminated glass in accordance with a first embodiment of the present invention.

An interlayer film 11 shown in Fig. 1 is a multi-layered interlayer film having a two or more-layer structure. The interlayer film 11 is used for obtaining laminated glass. The interlayer film 11 is an interlayer film for laminated glass. The interlayer film 11 is provided with a first layer 1, a second layer 2, and a third layer 3. The first layer 1 is arranged on a first surface 2a of the second layer 2 to be layered thereon. The third layer 3 is arranged on a second surface 2b opposite to the first surface 2a of the second layer 2 to be layered thereon. The second layer 2 is an intermediate layer. Each of the first layer 1 and the third layer 3 is a protective layer and is a surface layer in the present embodiment. The second layer 2 is arranged between the first layer 1 and the third layer 3 to be sandwiched therebetween. Accordingly, the interlayer film 11 has a multilayer structure (a first layer 1/a second layer 2/a third layer 3) in which the first layer 1, the second layer 2, and the third layer 3 are layered in this order.

In this connection, additional layers may be arranged between the first layer 1 and the second layer 2 and between the second layer 2 and the third layer 3, respectively. It is preferred that each of the first layer 1 and the third layer 3 be directly layered on the second layer 2. Examples of the additional layer include a layer containing polyethylene terephthalate and the like.

In the present embodiment, the first layer 1 contains a polyvinyl acetal resin and a plasticizer. The first layer 1 contains no magnesium or contains magnesium in a content of 50 ppm or less and the first layer 1 contains a phosphorus compound having a polyoxyalkylene group or a silane compound having a polyoxyalkylene group. At least one layer among the first layer 1, the second layer 2, and the third layer 3 contains heat shielding particles. It is preferred that the second layer 2 contain a thermoplastic resin, it is preferred that the second layer 2 contain a polyvinyl acetal resin as the thermoplastic resin, and it is preferred that the second layer 2 contain a plasticizer. It is preferred that the third layer 3 contain a thermoplastic resin, it is preferred that the third layer 3 contain a polyvinyl acetal resin as the thermoplastic resin, and it is preferred that the third layer 3 contain a plasticizer. From the viewpoint of further making the releasability of a lamination glass member from the interlayer film moderately high, it is preferred that the third layer 3 contain no magnesium or contain magnesium in a content of 50 ppm or less and the third layer 3 contain a phosphorus compound having a polyoxyalkylene group or a silane compound having a polyoxyalkylene group. It is preferred that the first layer 1 contain heat shielding particles because effects of the present invention are further effectively exerted. When the first layer 1 contains heat shielding particles, other layers (the second layer 2 and the third layer 3) may contain heat shielding particles and may contain no heat shielding particles. It is preferred that the third layer 3 contain heat shielding particles because effects of the present invention are further effectively exerted. From the viewpoint of further enhancing the heat shielding properties, it is preferred that the second layer 2 contain heat shielding particles.

Fig. 2 is a sectional view schematically showing an interlayer film for laminated glass in accordance with a second embodiment of the present invention.

The interlayer film 11A shown in Fig. 2 is a single-layered interlayer film having a one-layer structure. The interlayer film 11A is singly constituted by a first layer. The interlayer film 11A is used for obtaining laminated glass. The interlayer film 11A is an interlayer film for laminated glass.

In the present embodiment, the interlayer film 11A (first layer) contains a polyvinyl acetal resin and a plasticizer. The interlayer film 11A (first layer) contains no magnesium or contains magnesium in a content of 50 ppm or less and the interlayer film 11A (first layer) contains a phosphorus compound having a polyoxyalkylene group or a silane compound having a polyoxyalkylene group. The interlayer film 11A (first layer) contains heat shielding particles.

Hereinafter, the details of the first layer (including a single-layered interlayer film), the second layer, and the third layer which constitute the interlayer film according to the present invention, and the details of each ingredient contained in the first layer, the second layer, and the third layer will be described.

### (Thermoplastic resin)

It is preferred that the first layer (including a single-layered interlayer film) contain a thermoplastic resin (hereinafter, sometimes described as a thermoplastic resin (1)) and it is preferred that the first layer contain a polyvinyl acetal resin (hereinafter, sometimes described as a polyvinyl acetal resin (1)) as the thermoplastic resin (1). It is preferred that the second layer contain a thermoplastic resin (hereinafter, sometimes described as a thermoplastic resin (2)) and it is preferred that the second layer contain a polyvinyl acetal resin (hereinafter, sometimes described as a polyvinyl acetal resin (2)) as the thermoplastic resin (2). It is preferred that the third layer contain a thermoplastic resin (hereinafter, sometimes described as a thermoplastic resin (3)) and it is preferred that the third layer contain a polyvinyl acetal resin (hereinafter, sometimes described as a polyvinyl acetal resin (3)) as the thermoplastic resin (3). The polyvinyl acetal resin (1), the polyvinyl acetal resin (2), and the polyvinyl acetal resin (3) may be the same as or different from one another. One kind of each of the polyvinyl acetal resin (1), the polyvinyl acetal resin (2), and the polyvinyl acetal resin (3) may be used alone, and two or more kinds thereof may be used in combination. The thermoplastic resin (1), the thermoplastic resin (2), and the thermoplastic resin (3) may be the same as or different from one another. One kind of each of the thermoplastic resin (1), the thermoplastic resin (2), and the thermoplastic resin (3) may be used alone, and two or more kinds thereof may be used in combination.

Examples of the thermoplastic resin include a polyvinyl acetal resin, an ethylene-vinyl acetate copolymer resin, an ethylene-acrylic acid copolymer resin, a polyurethane resin, a polyvinyl alcohol resin, and the like. Thermoplastic resins other than these may be used.

For example, the polyvinyl acetal resin can be produced by acetalizing polyvinyl alcohol (PVA) with an aldehyde. It is preferred that the polyvinyl acetal resin be an acetalized product of polyvinyl alcohol. For example, the polyvinyl alcohol can be produced by saponifying polyvinyl acetate. The saponification degree of the polyvinyl alcohol generally lies within the range of 70 to 99.9% by mole.

The average polymerization degree of the polyvinyl alcohol is preferably 200 or more, more preferably 500 or more, even more preferably 1500 or more, further preferably 1600 or more, especially preferably 2600 or more, most preferably 2700 or more, and preferably 5000 or less, more preferably 4000 or less and further preferably 3500 or less. When the average polymerization degree is the lower limit or more, the penetration resistance of laminated glass is further enhanced. When the average polymerization degree is the upper limit or less, formation of an interlayer film is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. It is preferred that the number of carbon atoms of the acetal group in the polyvinyl acetal resin fall within the range of 3 to 5 and it is more preferred that the number of carbon atoms of the acetal group be 3 or 4. When the number of carbon atoms of the acetal group in the polyvinyl acetal resin is 3 or more, the glass transition temperature of the interlayer film is sufficiently lowered.

The aldehyde is not particularly limited. In general, an aldehyde with 1 to 10 carbon atoms is suitably used. Examples of the aldehyde with 1 to 10 carbon atoms include propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, and the like. Propionaldehyde, n-butyraldehyde, isobutyraldehyde, n-hexylaldehyde, or n-valeraldehyde is preferred, propionaldehyde, n-butyraldehyde, or isobutyraldehyde is more preferred, and n-butyraldehyde is further preferred. One kind of the aldehyde may be used alone and two or more kinds thereof may be used in combination.

The content of the hydroxyl group (the amount of hydroxyl groups) of the polyvinyl acetal resin (2) is preferably 17% by mole or more, more preferably 20% by mole or more, and further preferably 22% by mole or more and is preferably 30% by mole or less, more preferably less than 27% by mole, and further preferably 25% by mole or less. When the content of the hydroxyl group is the lower limit or more, the adhesive force of the interlayer film is further heightened. In particular, when the content of the hydroxyl group of the polyvinyl acetal resin (2) is 20% by mole or more, the resin is high in reaction efficiency and is excellent in productivity, and moreover, when being less than 27% by mole, the sound insulating properties of laminated glass are further heightened. Moreover, when the content of the hydroxyl group is the upper limit or less, the flexibility of the interlayer film is enhanced, and the handling of the interlayer film is facilitated.

The content of the hydroxyl group of each of the polyvinyl acetal resin (1) and the polyvinyl acetal resin (3) is preferably 25% by mole or more, more preferably 28% by mole or more, further preferably 30% by mole or more, and especially preferably 31% by mole or more and is preferably 40% by mole or less, more preferably 34.5% by mole or less, and further preferably 32% by mole or less. When the content of the hydroxyl group is the lower limit or more, the adhesive force of the interlayer film is further heightened. Moreover, when the content of the hydroxyl group is the upper limit or less, the flexibility of the interlayer film is enhanced, and the handling of the interlayer film is facilitated.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6728 "Testing methods for polyvinyl butyral".

The acetylation degree (the amount of acetyl groups) of the polyvinyl acetal resin (2) is preferably 0.01% by mole or more, more preferably 0.1% by mole or more, even more preferably 7% by mole or more, and further preferably 9% by mole or more and is preferably 30% by mole or less, more preferably 25% by mole or less, and further preferably 15% by mole or less. When the acetylation degree is the lower limit or more, the compatibility between the polyvinyl acetal resin and a plasticizer is heightened. When the acetylation degree is the upper limit or less, with regard to the interlayer film and laminated glass, the moisture resistance thereof is enhanced. In particular, when the acetylation degree of the polyvinyl acetal resin (2) is 0.1% by mole or more and is 25% by mole or less, the resulting laminated glass is excellent in penetration resistance.

The acetylation degree of each of the polyvinyl acetal resin (1) and the polyvinyl acetal resin (3) is preferably 0.01% by mole or more and more preferably 0.5% by mole or more and is preferably 10% by mole or less and more preferably 2% by mole or less. When the acetylation degree is the lower limit or more, the compatibility between the polyvinyl acetal resin and a plasticizer is heightened. When the acetylation degree is the upper limit or less, with regard to the interlayer film and laminated glass, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be measured in accordance with JIS K6728 "Testing methods for polyvinyl butyral".

The acetalization degree of the polyvinyl acetal resin (2) (the butyralization degree in the case of a polyvinyl butyral resin) is preferably 47% by mole or more, more preferably 60% by mole or more, and preferably 80% by mole or less, more preferably 70% by mole or less. When the acetalization degree is the lower limit or more, the compatibility between the polyvinyl acetal resin and a plasticizer is heightened. When the acetalization degree is the upper limit or less, the reaction time required for producing the polyvinyl acetal resin is shortened.

The acetalization degree of each of the polyvinyl acetal resin (1) and the polyvinyl acetal resin (3) (the butyralization degree in the case of a polyvinyl butyral resin) is preferably 55% by mole or more and more preferably 67% by mole or more and is preferably 75% by mole or less and more preferably 71% by mole or less. When the acetalization degree is the lower limit or more, the compatibility between the polyvinyl acetal resin and a plasticizer is heightened. When the acetalization degree is the upper limit or less, the reaction time required for producing the polyvinyl acetal resin is shortened.

The acetalization degree is a mole fraction, represented in percentage, obtained by dividing a value obtained by subtracting the amount of ethylene groups to which the hydroxyl group is bonded and the amount of ethylene groups to which the acetyl group is bonded from the total amount of ethylene groups in the main chain by the total amount of ethylene groups in the main chain.

In this connection, it is preferred that the content of the hydroxyl group (the amount of hydroxyl groups), the acetalization degree (the butyralization degree), and the acetylation degree be calculated from the results measured by a method in accordance with JIS K6728 "Testing methods for polyvinyl butyral". In this context, a method in accordance with ASTM D1396-92 may be used. When the polyvinyl acetal resin is a polyvinyl butyral resin, it is preferred that the content of the hydroxyl group (the amount of hydroxyl groups), the acetalization degree (the butyralization degree), and the acetylation degree be calculated from the results measured by a method in accordance with JIS K6728 "Testing methods for polyvinyl butyral".

From the viewpoint of further improving the penetration resistance of laminated glass, it is preferred that the polyvinyl acetal resin (2) be a polyvinyl acetal resin (A) with an acetylation degree (a) of 8% by mole or less and an acetalization degree (a) of 70% by mole or more or a polyvinyl acetal resin (B) with an acetylation degree (b) of more than 8% by mole. The polyvinyl acetal resin (1) may be the polyvinyl acetal resin (A) and may be the polyvinyl acetal resin (B). The polyvinyl acetal resin (3) may be the polyvinyl acetal resin (A) and may be the polyvinyl acetal resin (B).

The acetylation degree (a) of the polyvinyl acetal resin (A) is 8% by mole or less, preferably 7.5% by mole or less, more preferably 7% by mole or less, further preferably 6.5% by mole or less, and especially preferably 5% by mole or less and is preferably 0.1% by mole or more, more preferably 0.5% by mole or more, further preferably 0.8% by mole or more, and especially preferably 1% by mole or more. When the acetylation degree (a) is the upper limit or less and the lower limit or more, the transfer of a plasticizer can be easily controlled and the sound insulating properties of laminated glass are further heightened.

The acetalization degree (a) of the polyvinyl acetal resin (A) is 70% by mole or more, preferably 70.5% by mole or more, more preferably 71% by mole or more, further preferably 71.5% by mole or more, and especially preferably 72% by mole or more and is preferably 85% by mole or less, more preferably 83% by mole or less, further preferably 81% by mole or less, and especially preferably 79% by mole or less. When the acetalization degree (a) is the lower limit or more, the sound insulating properties of laminated glass are further heightened. When the acetalization degree (a) is the upper limit or less, the reaction time required for producing the polyvinyl acetal resin (A) can be shortened.

The content (a) of the hydroxyl group of the polyvinyl acetal resin (A) is preferably 18% by mole or more, more preferably 19% by mole or more, further preferably 20% by mole or more, and especially preferably 21% by mole or more and is preferably 31% by mole or less, more preferably 30% by mole or less, further preferably 29% by mole or less, and especially preferably 28% by mole or less. When the content (a) of the hydroxyl group is the lower limit or more, the adhesive force of the second layer is further heightened. When the content (a) of the hydroxyl group is the upper limit or less, the sound insulating properties of laminated glass are further heightened.

The acetylation degree (b) of the polyvinyl acetal resin (B) is more than 8% by mole, preferably 9% by mole or more, more preferably 9.5% by mole or more, further preferably 10% by mole or more, and especially preferably 10.5% by mole or more and is preferably 30% by mole or less, more preferably 28% by mole or less, further preferably 26% by mole or less, and especially preferably 24% by mole or less. When the acetylation degree (b) is the lower limit or more, the sound insulating properties of laminated glass are further heightened. When the acetylation degree (b) is the upper limit or less, the reaction time required for producing the polyvinyl acetal resin (B) can be shortened.

The acetalization degree (b) of the polyvinyl acetal resin (B) is preferably 50% by mole or more, more preferably 53% by mole or more, further preferably 55% by mole or more, and especially preferably 60% by mole or more and is preferably 80% by mole or less, more preferably 78% by mole or less, further preferably 76% by mole or less, and especially preferably 74% by mole or less. When the acetalization degree (b) is the lower limit or more, the sound insulating properties of laminated glass are further heightened. When the acetalization degree (b) is the upper limit or less, the reaction time required for producing the polyvinyl acetal resin (B) can be shortened.

The content (b) of the hydroxyl group of the polyvinyl acetal resin (B) is preferably 18% by mole or more, more preferably 19% by mole or more, further preferably 20% by mole or more, and especially preferably 21% by mole or more and is preferably 31% by mole or less, more preferably 30% by mole or less, further preferably 29% by mole or less, and especially preferably 28% by mole or less. When the content (b) of the hydroxyl group is the lower limit or more, the adhesive force of the second layer is further heightened. When the content (b) of the hydroxyl group is the upper limit or less, the sound insulating properties of laminated glass are further heightened.

It is preferred that each of the polyvinyl acetal resin (A) and the polyvinyl acetal resin (B) be a polyvinyl butyral resin.

### (Plasticizer)

It is preferred that the first layer (including a single-layered interlayer film) contain a plasticizer (hereinafter, sometimes described as a plasticizer (1)). It is preferred that the second layer contain a plasticizer (hereinafter, sometimes described as a plasticizer (2)). It is preferred that the third layer contain a plasticizer (hereinafter, sometimes described as a plasticizer (3)). By using a polyvinyl acetal resin and a plasticizer together, the adhesive force of a layer containing the polyvinyl acetal resin and the plasticizer to a lamination glass member or another layer is moderately heightened. The plasticizer is not particularly limited. The plasticizer (1), the plasticizer (2), and the plasticizer (3) may be the same as or different from one another. One kind of the plasticizer may be used alone, and two or more kinds thereof may be used in combination.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Organic ester plasticizers are preferred. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decanoic acid, and the like.

Examples of the polybasic organic acid ester include an ester compound of a polybasic organic acid and an alcohol having a linear or branched structure of 4 to 8 carbon atoms. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

### [Chemical 1]

In the foregoing formula (1), R1 and R2 each represent an organic group with 2 to 10 carbon atoms, R3 represents an ethylene group, an isopropylene group, or an n-propylene group, and p represents an integer of 3 to 10. It is preferred that R1 and R2 in the foregoing formula (1) each be an organic group with 5 to 10 carbon atoms, and it is more preferred that R1 and R2 each be an organic group with 6 to 10 carbon atoms.

It is preferred that the plasticizer include triethylene glycol di-2-ethylhexanoate (3GO), triethylene glycol di-2-ethylbutyrate (3GH), or triethylene glycol di-2-ethylpropanoate, it is more preferred that the plasticizer include triethylene glycol di-2-ethylhexanoate or triethylene glycol di-2-ethylbutyrate, and it is further preferred that the plasticizer include triethylene glycol di-2-ethylhexanoate.

The content of the plasticizer (2) (hereinafter, sometimes described as the content (2)) relative to 100 parts by weight of the thermoplastic resin (2) (100 parts by weight a polyvinyl acetal resin (2) when the thermoplastic resin (2) is the polyvinyl acetal resin (2)) is preferably 40 parts by weight or more and more preferably 55 parts by weight or more and is preferably 90 parts by weight or less and more preferably 85 parts by weight or less. When the content (2) is the lower limit or more, the flexibility of the interlayer film is enhanced, and the handling of the interlayer film is facilitated. When the content (2) is the upper limit or less, the transparency of the interlayer film is further enhanced.

Each of the content of the plasticizer (1) (hereinafter, sometimes described as the content (1)) relative to 100 parts by weight of the thermoplastic resin (1) (100 parts by weight a polyvinyl acetal resin (1) when the thermoplastic resin (1) is the polyvinyl acetal resin (1)) and the content of the plasticizer (3) (hereinafter, sometimes described as the content (3)) relative to 100 parts by weight of the thermoplastic resin (3) (100 parts by weight a polyvinyl acetal resin (3) when the thermoplastic resin (3) is the polyvinyl acetal resin (3)) is preferably 30 parts by weight or more and more preferably 35 parts by weight or more and is preferably 44 parts by weight or less and more preferably 42 parts by weight or less. When each of the content (1) and the content (3) is the lower limit or more, the flexibility of the interlayer film is enhanced, and the handling of the interlayer film is facilitated. When each of the content (1) and the content (3) is the upper limit or less, the penetration resistance of laminated glass is further enhanced.

From the viewpoints of further making the releasability of glass moderate and further enhancing the penetration resistance of laminated glass, it is preferred that the content (2) be larger than the content (1) and it is preferred that the content (2) be larger than the content (3).

From the viewpoints of further making the releasability of glass moderate and further enhancing the penetration resistance of laminated glass, each of the absolute value of a difference between the content (2) and the content (1) and the absolute value of a difference between the content (2) and the content (3) is preferably 10 parts by weight or more and more preferably 20 parts by weight or more. Each of the absolute value of a difference between the content (2) and the content (1) and the absolute value of a difference between the content (2) and the content (3) is preferably 50 parts by weight or less.

### (Heat shielding compound)

It is preferred that the interlayer film contain a heat shielding compound. It is preferred that the first layer contain a heat shielding compound. It is preferred that the second layer contain a heat shielding compound. It is preferred that the third layer contain a heat shielding compound. One kind of the heat shielding compound may be used alone and two or more kinds thereof may be used in combination.

It is preferred that the heat shielding compound be constituted of at least one kind of Ingredient X among a phthalocyanine compound, a naphthalocyanine compound, and an anthracyanine compound or be constituted of heat shielding particles. In this case, the heat shielding compound may be constituted of both of the Ingredient X and the heat shielding particles.

### Ingredient X:

It is preferred that the interlayer film include at least one kind of Ingredient X among a phthalocyanine compound, a naphthalocyanine compound and an anthracyanine compound. It is preferred that the first layer contain the Ingredient X. It is preferred that the second layer contain the Ingredient X. It is preferred that the third layer contain the Ingredient X. The Ingredient X is a heat shielding compound. One kind of the Ingredient X may be used alone, and two or more kinds thereof may be used in combination.

The Ingredient X is not particularly limited. As the Ingredient X, conventionally known phthalocyanine compound, naphthalocyanine compound and anthracyanine compound can be used.

Examples of the Ingredient X include phthalocyanine, a derivative of phthalocyanine, naphthalocyanine, a derivative of naphthalocyanine, anthracyanine, and a derivative of anthracyanine, and the like. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.

With regard to the interlayer film and laminated glass, from the viewpoint of further enhancing the heat shielding properties thereof, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding properties and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atoms or copper atoms and a derivative of phthalocyanine containing vanadium atoms or copper atoms. With regard to the interlayer film and laminated glass, from the viewpoint of still further enhancing the heat shielding properties thereof, it is preferred that the Ingredient X have a structural unit in which an oxygen atom is bonded to a vanadium atom.

In 100% by weight of a layer containing the Ingredient X (a first layer, a second layer or a third layer), the content of the Ingredient X is preferably 0.001% by weight or more, more preferably 0.005% by weight or more, further preferably 0.01% by weight or more, especially preferably 0.02% by weight or more, and preferably 0.2% by weight or less, more preferably 0.1% by weight or less, further preferably 0.05% by weight or less and especially preferably 0.04% by weight or less. When the content of the Ingredient X is the above lower limit or more and the above upper limit or less, the heat shielding properties are sufficiently enhanced and the visible light transmittance is sufficiently heightened. For example, it is possible to make the visible light transmittance 70% or more.

### Heat shielding particles:

Heat shielding particles are contained in any one of layers of the interlayer film. It is preferred that the first layer contain the heat shielding particles. It is preferred that the second layer contain the heat shielding particles. It is preferred that the third layer contain the heat shielding particles. The heat shielding particle is of a heat shielding compound. By the use of heat shielding particles, infrared rays (heat rays) can be effectively cut off. One kind of the heat shielding particles may be used alone, and two or more kinds thereof may be used in combination.

From the viewpoint of further enhancing the heat shielding properties of laminated glass, it is more preferred that the heat shielding particles be metal oxide particles. It is preferred that the heat shielding particle be a particle (a metal oxide particle) formed from an oxide of a metal. Other examples of the heat shielding particle include a particle of carbon black and the like. From the viewpoints of enhancing the heat shielding properties of laminated glass and making the laminated glass have a moderate privacy protection property, it is preferred that the heat shielding particles be particles of carbon black.

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. As such, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride (LaB₆) particles, and the like. Heat shielding particles other than these may be used. Of these, since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

With regard to the interlayer film and laminated glass, from the viewpoint of further enhancing the heat shielding properties thereof, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

With regard to the interlayer film and laminated glass, from the viewpoint of further enhancing the heat shielding properties thereof, cesium-doped tungsten oxide particles are especially preferred. With regard to the interlayer film and laminated glass, from the viewpoint of still further enhancing the heat shielding properties thereof, it is preferred that the cesium-doped tungsten oxide particles be tungsten oxide particles represented by the formula: CS_{0.33}WO₃.

The average particle diameter of the heat shielding particles is preferably 0.01 µm or more, more preferably 0.02 µm or more, and preferably 0.1 µm or less and more preferably 0.05 µm or less. When the average particle diameter is the above lower limit or more, the heat ray shielding properties are sufficiently enhanced. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of a layer containing the heat shielding particles (a first layer, a second layer, or a third layer), the content of the heat shielding particles is preferably 0.01% by weight or more, more preferably 0.1% by weight or more, further preferably 1% by weight or more, and especially preferably 1.5% by weight or more and is preferably 6% by weight or less, more preferably 5.5% by weight or less, further preferably 4% by weight or less, especially preferably 3.5% by weight or less, and most preferably 3.0% by weight or less. When the content of the heat shielding particles is the lower limit or more and the upper limit or less, the heat shielding properties are sufficiently enhanced and the visible light transmittance is sufficiently enhanced. In this connection, the content of the heat shielding particles can be measured by means of an ICP emission spectrometer ("ICPE-9000" available from SHIMADZU CORPORATION) or TG-DTA ("TGA 8000" available from PerkinElmer Japan Co., Ltd.).

In the present invention, from the viewpoint of controlling the adhesive force within a satisfactory range, the first layer contains no magnesium or contains magnesium in a content of 50 ppm or less. From the viewpoint of controlling the adhesive force within a satisfactory range, it is preferred that the third layer contain no magnesium or contain magnesium in a content of 50 ppm or less.

From the viewpoint of controlling the adhesive force within a further satisfactory range, it is preferred that the first layer contain no alkali metal or contain an alkali metal in a content of 1000 ppm or less. From the viewpoint of controlling the adhesive force within a further satisfactory range, it is preferred that the third layer contain no alkali metal or contain an alkali metal in a content of 1000 ppm or less.

From the viewpoint of controlling the adhesive force within a satisfactory range, it is preferred that the interlayer film contain at least one kind of metal salt (hereinafter, sometimes described as Metal salt M) among an alkali metal salt, an alkaline earth metal salt, and a magnesium salt. From the viewpoint of controlling the adhesive force within a satisfactory range, it is preferred that the second layer contain the Metal salt M and it is preferred that the third layer contain the Metal salt M. The first layer may contain the Metal salt M. By the use of the Metal salt M, controlling the adhesivity between the interlayer film and a glass plate or the adhesivity between respective layers in the interlayer film is facilitated. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr, and Ba. It is preferred that the metal salt contained in the interlayer film contain at least one kind of metal between K and Mg.

Moreover, it is more preferred that the Metal salt M be an alkali metal salt of an organic acid with 2 to 16 carbon atoms, an alkaline earth metal salt of an organic acid with 2 to 16 carbon atoms, and a magnesium salt of an organic acid with 2 to 16 carbon atoms, and it is further preferred that the Metal salt M be a magnesium carboxylate with 2 to 16 carbon atoms or a potassium carboxylate with 2 to 16 carbon atoms.

Although the magnesium carboxylate with 2 to 16 carbon atoms and the potassium carboxylate with 2 to 16 carbon atoms are not particularly limited, examples thereof include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg (the magnesium atom) and K (the potassium atom) in a layer containing the Metal salt M (a first layer, a second layer, or a third layer) is preferably 5 ppm or more, more preferably 10 ppm or more, and further preferably 20 ppm or more and is preferably 300 ppm or less, more preferably 250 ppm or less, and further preferably 200 ppm or less. The total of the contents of Mg (the magnesium atom) and K (the potassium atom) in a layer containing the Metal salt M (a first layer, a second layer, or a third layer) is preferably 5 ppm or more, more preferably 10 ppm or more, and further preferably 20 ppm or more and is preferably 300 ppm or less, more preferably 250 ppm or less, and further preferably 200 ppm or less. In this context, the content of Mg in the first layer is 50 ppm or less. When the total of the contents of Mg and K is the lower limit or more and the upper limit or less, the adhesivity between the interlayer film and a glass plate or the adhesivity between respective layers in the interlayer film can be further well controlled. In this connection, the contents of the alkali metal, the alkaline earth metal, K, and Mg can be measured by means of an ICP emission spectrometer ("ICPE-9000" available from SHIMADZU CORPORATION).

### (Phosphorus compound and silane compound)

From the viewpoint of making the releasability of a lamination glass member from the interlayer film moderately high, the first layer contains no magnesium or contains magnesium in a content of 50 ppm or less and contains a phosphorus compound having a polyoxyalkylene group or a silane compound having a polyoxyalkylene group. The first layer may contain only the phosphorus compound, may contain only the silane compound, and may contain both of the phosphorus compound and the silane compound. From the viewpoint of making the releasability of a lamination glass member from the interlayer film moderately high, it is preferred that the third layer contain no magnesium or contain magnesium in a content of 50 ppm or less and contain a phosphorus compound having a polyoxyalkylene group or a silane compound having a polyoxyalkylene group. The second layer may contain no magnesium or contain magnesium in a content of 50 ppm or less and may contain a phosphorus compound having a polyoxyalkylene group or a silane compound having a polyoxyalkylene group. The phosphorus compound contains a phosphorus atom. One kind of the phosphorus compound may be used alone, and two or more kinds thereof may be used in combination. One kind of the silane compound may be used alone, and two or more kinds thereof may be used in combination.

From the viewpoint of effectively enhancing the releasability of a lamination glass member from the interlayer film, the number of carbon atoms of the alkylene group in the polyoxyalkylene group is preferably 4 or less, more preferably 3 or less, and especially preferably 2 or less. It is especially preferred that the polyoxyalkylene group be a polyoxyethylene group.

From the viewpoint of effectively enhancing the releasability of a lamination glass member from the interlayer film, it is preferred that the phosphorus compound having a polyoxyalkylene group be a phosphorus compound having a polyoxyalkylene group and an alkyl group bonded to a polyoxyalkylene group or the silane compound having a polyoxyalkylene group be a silane compound having a polyoxyalkylene group and an alkyl group bonded to a polyoxyalkylene group.

From the viewpoint of effectively enhancing the releasability of a lamination glass member from the interlayer film, it is preferred that the phosphorus compound be a phosphoric acid ester.

From the viewpoint of effectively enhancing the releasability of a lamination glass member from the interlayer film, it is preferred that the silane compound be a silsesquioxane.

From the viewpoint of effectively enhancing the releasability of a lamination glass member from the interlayer film, it is preferred that the first layer contain a phosphorus compound having a polyoxyalkylene group. From the viewpoint of further effectively enhancing the releasability of a lamination glass member from the interlayer film, as the phosphorus compound having a polyoxyalkylene group, a polyoxyethylene alkyl ether phosphate is preferred. Moreover, as the polyoxyethylene alkyl ether phosphate, polyoxyethylene lauryl ether phosphate or polyoxyethylene tridecyl ether phosphate is preferred.

Examples of a commercial product of the phosphorus compound include "PLYSURF A212C", "PLYSURF A215C", "PLYSURF A208F", "PLYSURF A208N", "PLYSURF A208B", "PLYSURF A219B", "PLYSURF A210D", and "PLYSURF AL" available from DKS Co., Ltd., "ADEKA COL TS-230E", "ADEKA COL TS-230E", "ADEKA COL TS-230E", "ADEKA COL CS-141E", "ADEKA COL CS-1361E", "ADEKA COL CS279", "ADEKA COL PS-440E", "ADEKA COL PS-810E", "ADEKA COL PS-807", and "ADEKA COL PS-984" available from ADEKA CORPORATION, and the like.

Examples of a commercial product of the silane compound include "PG1190" available from Hybrid Plastics Inc. and the like.

From the viewpoint of effectively enhancing the releasability of a lamination glass member from the interlayer film, in 100% by weight of a layer containing the phosphorus compound having a polyoxyalkylene group or the silane compound having a polyoxyalkylene group (a first layer, a second layer, or a third layer), the content of the phosphorus compound having a polyoxyalkylene group or the silane compound having a polyoxyalkylene group (the total content of the two) is preferably 0.05% by weight or more, more preferably 0.1% by weight or more, further preferably 0.15% by weight or more, and especially preferably 0.3% by weight or more and is preferably 10% by weight or less, more preferably 3% by weight or less, and further preferably 1% by weight or less.

From the viewpoint of controlling the adhesive force within a further satisfactory range, in a layer containing the phosphorus compound having a polyoxyalkylene group or the silane compound having a polyoxyalkylene group (a first layer, a second layer, or a third layer), the content of P (the phosphorus atom) or the content of Si (the silicon atom) is preferably 15 ppm or more, more preferably 50 ppm or more, further preferably 100 ppm or more, and especially preferably 150 ppm or more and is preferably 6000 ppm or less, more preferably 2500 ppm or less, further preferably 1000 ppm or less, and especially preferably 500 ppm or less. In this connection, the contents of P (the phosphorus atom) and Si (the silicon atom) can be measured by means of an ICP emission spectrometer ("ICPE-9000" available from SHIMADZU CORPORATION).

### (Ultraviolet ray screening agent)

It is preferred that the interlayer film include an ultraviolet ray screening agent. It is preferred that the first layer contain an ultraviolet ray screening agent. It is preferred that the second layer contain an ultraviolet ray screening agent. It is preferred that the third layer contain an ultraviolet ray screening agent. By the use of an ultraviolet ray screening agent, even when the interlayer film and the laminated glass are used for a long period of time, the visible light transmittance becomes further difficult to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure or an ultraviolet ray screening agent having a benzoate structure, more preferably an ultraviolet ray screening agent having a benzotriazole structure or an ultraviolet ray screening agent having a benzophenone structure, and further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface thereof may be coated with any material. Examples of the coating material for the surface of the ultraviolet ray screening agent containing a metal oxide include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), and 2-(2'-hydroxy-3',5'-di-amylphenyl)benzotriazole ("Tinuvin 328" available from BASF Japan Ltd.). It is preferred that the ultraviolet ray screening agent be an ultraviolet ray screening agent having a benzotriazole structure containing a halogen atom and it is more preferred that the ultraviolet ray screening agent be an ultraviolet ray screening agent having a benzotriazole structure containing a chlorine atom, because those are excellent in ultraviolet ray screening performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

From the viewpoint of further suppressing the lowering in visible light transmittance after the lapse of a certain period of time, in 100% by weight of a layer containing the ultraviolet ray screening agent (a first layer, a second layer, or a third layer), the content of the ultraviolet ray screening agent, for example, the content of the benzotriazole compound, is preferably 0.1% by weight or more, more preferably 0.2% by weight or more, further preferably 0.3% by weight or more, especially preferably 0.5% by weight or more, and preferably 2.5% by weight or less, more preferably 2% by weight or less, further preferably 1% by weight or less, and especially preferably 0.8% by weight or less. In particular, by setting the content of the ultraviolet ray screening agent to be 0.2% by weight or more in 100% by weight of a layer containing the ultraviolet ray screening agent, with regard to the interlayer film and laminated glass, the lowering in visible light transmittance thereof after the lapse of a certain period of time can be significantly suppressed.

### (Oxidation inhibitor)

It is preferred that the interlayer film include an oxidation inhibitor. It is preferred that the first layer contain an oxidation inhibitor. It is preferred that the second layer contain an oxidation inhibitor. It is preferred that the third layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid)ethylenebis(oxyethylene), and the like. One kind or two or more kinds among these oxidation inhibitors are suitably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, tris(2,4-di-t-butylphenyl) phosphite, 2,2'-methylenebis(4,6-di-t-butyl-1-phenyloxy)(2-ethylhexyloxy)phosphorus, and the like. One kind or two or more kinds among these oxidation inhibitors are suitably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "IRGANOX 1010" available from BASF Japan Ltd., and the like.

With regard to the interlayer film and laminated glass, in order to maintain high visible light transmittance thereof over a long period of time, it is preferred that the content of the oxidation inhibitor be 0.035% by weight or more and it is more preferred that the content thereof be 0.05% by weight or more in 100% by weight of the interlayer film or in 100% by weight of a layer containing the oxidation inhibitor (a first layer, a second layer, or a third layer). Moreover, since an effect commensurate with the addition of an oxidation inhibitor is not attained, it is preferred that the content of the oxidation inhibitor be 2% by weight or less in 100% by weight of the interlayer film or in 100% by weight of a layer containing the oxidation inhibitor.

### (Light stabilizer)

From the viewpoint of suppressing an increase in the YI value of laminated glass, it is preferred that the interlayer film contain a light stabilizer. It is preferred that the first layer contain a light stabilizer. It is preferred that the second layer contain a light stabilizer. It is preferred that the third layer contain a light stabilizer. One kind of the light stabilizer may be used alone, and two or more kinds thereof may be used in combination.

It is preferred that the light stabilizer be a hindered amine light stabilizer. Examples of the hindered amine light stabilizer include a hindered amine light stabilizer in which an alkyl group, an alkoxy group, or a hydrogen atom is bonded to a nitrogen atom of the piperidine structure and the like. From the viewpoint of further suppressing an increase in the YI value of laminated glass, a hindered amine light stabilizer in which an alkyl group or an alkoxy group is bonded to a nitrogen atom of the piperidine structure is preferred. It is preferred that the hindered amine light stabilizer be a hindered amine light stabilizer in which an alkyl group is bonded to a nitrogen atom of the piperidine structure, and it is also preferred that the hindered amine light stabilizer be a hindered amine light stabilizer in which an alkoxy group is bonded to a nitrogen atom of the piperidine structure.

Examples of the compound in which a carbon atom (preferably an alkyl group) is bonded to a nitrogen atom of the piperidine structure include Tinuvin 765, Tinuvin 144, Tinuvin 723, Tinuvin 622SF, ADK STAB LA-52, and the like.

Examples of the compound in which an oxygen atom (preferably an alkoxy group) is bonded to a nitrogen atom of the piperidine structure include Tinuvin NOR371, Tinuvin XT850FF, Tinuvin XT855FF, ADK STAB LA-81, and the like.

Examples of the compound in which a hydrogen atom is bonded to a nitrogen atom of the piperidine structure include Tinuvin 770DF, Hostavin N24, and the like.

In 100% by weight of the interlayer film or in 100% by weight of a layer containing the light stabilizer (a first layer, a second layer, or a third layer), the content of the light stabilizer is preferably 0.0035% by weight or more and more preferably 0.025% by weight or more and is preferably 0.5% by weight or less and more preferably 0.3% by weight or less. When the content of the light stabilizer is the lower limit or more and the upper limit or less, an increase in the YI value of laminated glass can be further suppressed.

### (Other ingredients)

Each of the first layer, the second layer, and the third layer may contain additives such as a flame retardant, an antistatic agent, a pigment, a dye, a moisture-resistance improving agent, a fluorescent brightening agent, and an infrared ray absorber, as necessary. One kind of these additives may be used alone and two or more kinds thereof may be used in combination.

### (Other details of interlayer film for laminated glass)

The thickness of the interlayer film is not particularly limited. From the viewpoint of the practical aspect and the viewpoint of sufficiently enhancing the penetration resistance and flexural rigidity of laminated glass, the thickness of the interlayer film is preferably 0.1 mm or more and more preferably 0.25 mm or more and is preferably 3 mm or less and more preferably 1.5 mm or less. When the thickness of the interlayer film is the lower limit or more, the penetration resistance of laminated glass is enhanced. When the thickness of the interlayer film is the upper limit or less, the transparency of the interlayer film is further improved.

The thickness of the interlayer film is defined as T.

In the case of a multi-layered interlayer film, the thickness of the second layer is preferably 0.0625T or more and more preferably 0.1T or more and is preferably 0.375T or less and more preferably 0.25T or less. When the thickness of the second layer is the lower limit or more and the upper limit or less, the penetration resistance of laminated glass is further enhanced and the bleed-out of a plasticizer can be suppressed.

The thickness of each of the first layer and the third layer is preferably 0.3125T or more and more preferably 0.375T or more and is preferably 0.9375T or less and more preferably 0.9T or less. The thickness of each of the first layer and the third layer may be 0.46875T or less and may be 0.45T or less. Moreover, when the thickness of each of the first layer and the third layer is the lower limit or more and the upper limit or less, the penetration resistance of laminated glass is further enhanced and the bleed-out of a plasticizer can be suppressed.

### (Laminated glass)

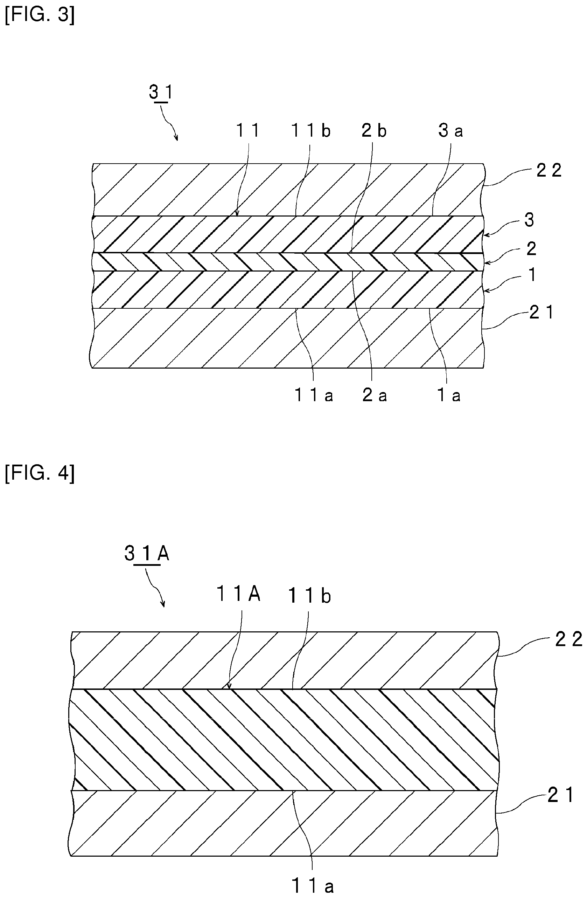

Fig. 3 is a sectional view schematically showing an example of laminated glass prepared with the interlayer film for laminated glass shown in Fig. 1.

The laminated glass 31 shown in Fig. 3 is provided with a first lamination glass member 21, a second lamination glass member 22, and an interlayer film 11. The interlayer film 11 is arranged between the first lamination glass member 21 and the second lamination glass member 22 to be sandwiched therebetween.

The first lamination glass member 21 is arranged on a first surface 11a of the interlayer film 11 to be layered thereon. The second lamination glass member 22 is arranged on a second surface 11b opposite to the first surface 11a of the interlayer film 11 to be layered thereon. The first lamination glass member 21 is arranged on an outer surface 1a of a first layer 1 to be layered thereon. The second lamination glass member 22 is arranged on an outer surface 3a of a third layer 3 to be layered thereon.

Fig. 4 is a sectional view schematically showing an example of laminated glass prepared with the interlayer film for laminated glass shown in Fig. 2.

The laminated glass 31A shown in Fig. 4 is provided with a first lamination glass member 21, a second lamination glass member 22, and an interlayer film 11A. The interlayer film 11A is arranged between the first lamination glass member 21 and the second lamination glass member 22 to be sandwiched therebetween.

The first lamination glass member 21 is arranged on a first surface 11a of the interlayer film 11A to be layered thereon. The second lamination glass member 22 is arranged on a second surface 11b opposite to the first surface 11a of the interlayer film 11A to be layered thereon.

As described above, the laminated glass according to the present invention is provided with a first lamination glass member, a second lamination glass member, and an interlayer film, and the interlayer film is the interlayer film for laminated glass according to the present invention. In the laminated glass according to the present invention, the above-mentioned interlayer film is arranged between the first lamination glass member and the second lamination glass member.

Examples of the lamination glass member include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate provided with a glass plate, and it is preferred that at least one glass plate be used.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, green glass, and the like. The organic glass is synthetic resin glass substituted for inorganic glass. Examples of the sheet of organic glass include a polycarbonate plate, a poly(meth)acrylic resin plate, and the like. Examples of the poly(meth)acrylic resin plate include a polymethyl (meth)acrylate plate, and the like.

The thickness of the lamination glass member is preferably 1 mm or more and is preferably 5 mm or less and more preferably 3 mm or less. Moreover, when the lamination glass member is a glass plate, the thickness of the glass plate is preferably 1 mm or more and is preferably 5 mm or less and more preferably 3 mm or less. When the lamination glass member is a PET film, the thickness of the PET film is preferably 0.03 mm or more and is preferably 0.5 mm or less.

The method for producing the laminated glass is not particularly limited. For example, the interlayer film is sandwiched between the first lamination glass member and the second lamination glass member, and then, passed through pressure rolls or subjected to decompression suction in a rubber bag, so that the air remaining between the first and the second lamination glass members and the interlayer film is removed. Afterward, the members are preliminarily bonded together at about 70 to 110°C to obtain a laminate. Next, by putting the laminate into an autoclave or by pressing the laminate, the members are press-bonded together at about 120 to 150°C and under a pressure of 1 to 1.5 MPa. In this way, laminated glass can be obtained.

Each of the interlayer film and the laminated glass can be used for automobiles, railway vehicles, aircraft, ships, buildings, and the like. Each of the interlayer film and the laminated glass can also be used for applications other than these applications. It is preferred that the interlayer film and the laminated glass be an interlayer film and laminated glass for vehicles or for building respectively, and it is more preferred that the interlayer film and the laminated glass be an interlayer film and laminated glass for vehicles respectively. Each of the interlayer film and the laminated glass can be used for a windshield, side glass, rear glass, or roof glass of an automobile, and the like. The interlayer film and the laminated glass are suitably used for automobiles. The interlayer film is used for obtaining laminated glass of an automobile.

Hereinafter, the present invention will be described in more detail with reference to examples. The present invention is not limited only to these examples.

The following materials were used to form a second layer and a third layer.

### (Thermoplastic resin)

PVB1 (a polyvinyl acetal resin, n-butyraldehyde which has 4 carbon atoms was used for the acetalization, the average polymerization degree of polyvinyl alcohol of 1700, the content of the hydroxyl group of 30.7% by mole, the acetalization degree of 68.5% by mole, the acetylation degree of 0.8% by mole)

PVB2 (a polyvinyl acetal resin, n-butyraldehyde which has 4 carbon atoms was used for the acetalization, the average polymerization degree of polyvinyl alcohol of 2300, the content of the hydroxyl group of 23.3% by mole, the acetalization degree of 64.2% by mole, the acetylation degree of 12.5% by mole)

With regard to the polyvinyl acetal resin, the acetalization degree (the butyralization degree), the acetylation degree, and the content of the hydroxyl group were measured by a method in accordance with JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

### (Plasticizer)

3GO (triethylene glycol di-2-ethylhexanoate)

### (Heat shielding particles)

ITO (tin-doped indium oxide particles)
ATO (antimony-doped tin oxide particles)
Carbon black

### (Metal salt)

Mg acetate (magnesium acetate)

### (Phosphorus compound having polyoxyalkylene group)

Polyoxyethylene lauryl ether phosphate PLYSURF A208B (available from DKS Co., Ltd.) (described as A208B in the table)
Polyoxyethylene lauryl ether phosphate PLYSURF A219B (available from DKS Co., Ltd.) (described as A219B in the table)
Polyoxyethylene tridecyl ether phosphate PLYSURF A212C (available from DKS Co., Ltd.) (described as A212C in the table)
A polyoxyethylene alkyl ether phosphate PLYSURF A208F (available from DKS Co., Ltd.) (described as A208F in the table)

### (Other phosphorus compounds)

Dibutyl phosphate
Tributyl phosphate
Tris(2-ethylhexyl) phosphate
PEG (the polymerization degree of 400, "Polyethylene glycol 400" available from KANTO CHEMICAL CO., INC.)

### (Silane compound having polyoxyalkylene group)

PG1190 ("POSS PG1190" available from Hybrid Plastics Inc.)

### (Another ingredient)

BHT (2,6-di-t-butyl-p-cresol)

### (Example 1)

### (1) Preparation of composition for forming first layer

One hundred parts by weight of PVB1, 40 parts by weight of 3GO, PLYSURF A208B in an amount that the proportion thereof in the resulting first layer becomes 0.7% by weight, ITO in an amount that the proportion thereof in the resulting interlayer film becomes 0.15% by weight, and 0.2 parts by weight of an oxidation inhibitor (BHT) were mixed to obtain a composition for forming a first layer.

### (2) Preparation of interlayer film

The composition for forming a first layer was extruded using an extruder to prepare a single-layered interlayer film (760 µm in thickness) composed only of a first layer (760 µm in thickness).

### (3) Preparation of laminated glass

Two washed and dried glass plates (clear float glass, 25 cm in longitudinal length × 10 cm in transversal length × 2.5 mm in thickness) were prepared. The obtained interlayer film was sandwiched between the two glass plates to obtain a laminate. The obtained laminate was put into a rubber bag and the inside thereof was degassed for 20 minutes at a degree of vacuum of 2660 Pa (20 torr). Afterward, while keeping the laminate degassed, furthermore, the laminate was held in place for 30 minutes at 90°C and pressed under vacuum in an autoclave. The laminate thus preliminarily press-bonded was subjected to press-bonding for 20 minutes under conditions of 135°C and a pressure of 1.2 MPa (12 kg/cm²) in an autoclave to obtain a sheet of laminated glass.

### (Examples 2 to 8, Reference Examples 9 to 15, Examples 16 to 20, Reference Example 21, Examples 22, 23, and Comparative Examples 1 to 5)

An interlayer film and a sheet of laminated glass were obtained in the same manner as that in Example 1 except that the kind of ingredients to be blended for a first layer and the blending amount thereof were changed to those listed in the following Tables 1 to 3.

In this connection, the blending amount of magnesium acetate was set to an amount that the concentration of magnesium in the resulting first layer becomes a numerical value shown in Tables 1 to 3. Heat shielding particles in an amount that the content of the heat shielding particles in the resulting first layer becomes a numerical value shown in Tables 1 to 3 were blended. A phosphorus compound and a silane compound in respective amounts that the content of the phosphorus compound and the content of the silane compound in the resulting first layer become numerical values shown in Tables 1 to 3 respectively were blended.

In this connection, in all of Examples 2 to 8, Reference Examples 9 to 15, Examples 16 to 20, Reference Example 21, Examples 22, 23, and Comparative Examples 1 to 5, for the first layer, an oxidation inhibitor of the same kind as that in Example 1 was blended in the same amount as that (the amount relative to the polyvinyl acetal resin) in Example 1. In Tables 1 to 3, the description of the content of the oxidation inhibitor was omitted.

### (Example 24)

### (1) Preparation of composition for forming first and third layers

One hundred parts by weight of PVB1, 40 parts by weight of 3GO, PLYSURF A208B in an amount that the proportion thereof in the resulting first and third layers becomes 0.7% by weight, ITO in an amount that the proportion thereof in the resulting interlayer film becomes 0.16% by weight, and 0.2 parts by weight of an oxidation inhibitor (BHT) were mixed to obtain a composition for forming first and third layers.

### (2) Preparation of composition for forming second layer

One hundred parts by weight of PVB2 and 60 parts by weight of 3GO were mixed to obtain a composition for forming a second layer.

### (3) Preparation of interlayer film

The composition for forming first and third layers and the composition for forming a second layer were coextruded to prepare an interlayer film for laminated glass of a three-layer structure in which a first layer (350 µm in average thickness), a second layer (100 µm in average thickness), and first and third layers (350 µm in average thickness) are layered in this order in the thickness direction.

### (4) Preparation of laminated glass

Two washed and dried glass plates (clear float glass, 25 cm in longitudinal length × 10 cm in transversal length × 2.5 mm in thickness) were prepared. The obtained interlayer film was sandwiched between the two glass plates to obtain a laminate. The obtained laminate was put into a rubber bag and the inside thereof was degassed for 20 minutes at a degree of vacuum of 2660 Pa (20 torr). Afterward, while keeping the laminate degassed, furthermore, the laminate was held in place for 30 minutes at 90°C and pressed under vacuum in an autoclave. The laminate thus preliminarily press-bonded was subjected to press-bonding for 20 minutes under conditions of 135°C and a pressure of 1.2 MPa (12 kg/cm²) in an autoclave to obtain a sheet of laminated glass.

### (Examples 25 to 29 and Comparative Example 6)

An interlayer film and a sheet of laminated glass were obtained in the same manner as that in Example 24 except that the kind of ingredients to be blended for first and third layers and a second layer and the blending amount thereof were changed to those listed in the following Table 4.

In this connection, the blending amount of magnesium acetate was set to an amount that the concentration of magnesium in the resulting first and third layers becomes a numerical value shown in Table 4. Heat shielding particles in an amount that the content of the heat shielding particles in each of the resulting first and third layers and the resulting second layer becomes a numerical value shown in Table 4 were blended. A phosphorus compound and a silane compound in respective amounts that the contents of the phosphorus compound and the silane compound in each of the resulting first and third layers and the resulting second layer become numerical values shown in Table 4 respectively were blended.

In this connection, in all of Examples 25 to 29 and Comparative Example 6, an oxidation inhibitor of the same kind as that in Example 24 was blended in the same amount as that (the amount relative to the polyvinyl acetal resin) in Example 24. In Table 4, the description of the content of the oxidation inhibitor was omitted.

### (Evaluation)

### (1) Haze value

The sheet of laminated glass obtained was measured for the haze value in accordance with JIS K6714 using a haze meter ("TC-H III DPK" available from Tokyo Denshoku Co., Ltd.). The haze value was judged according to the following criteria.

### [Criteria for judgment in haze value]

○○: The haze value is 1.0% or less.
○: The haze value is more than 1.0% and 1.5% or less.
Δ: The haze value is more than 1.5% and 2.0% or less.
×: The haze value is more than 2.0%.

### (2) Releasability of glass

A sheet of laminated glass was broken into pieces with a hammer to be evaluated for the releasability of glass. The details are as follows.

A sheet of laminated glass was allowed to stand at a temperature of 24°C ± 1°C for 16 hours to adjust the sheet temperature, and this sheet was struck by a hammer with a head of 0.45 kg until the glass was broken into pieces having a particle diameter of 6 mm or less. Then, the sheet was visually observed, and the releasability of glass was judged according to the following criteria.

### [Criteria for judgment in releasability of glass]

○○: The proportion occupied by an area from which glass portions were released is 50% or more of the whole area.
○: The proportion occupied by an area from which glass portions were released is 5% or more and less than 50% of the whole area.
×: The proportion occupied by an area from which glass portions were released is less than 5% of the whole area.

The details and the results are shown in the following Tables 1 to 4.

**[Table 1]**

| | | Example 1 | Example 2 | Example 3 | Example 4 | Example 5 | Example 6 | Example 7 | Example 8 | Reference Example 9 | Reference Example 10 | Reference Example 11 | Reference Example 12 |
|---|---|---|---|---|---|---|---|---|---|---|---|---|---|
| Polyvinyl acetal resin | Kind | PVB1 | PVB1 | PVB1 | PVB1 | PVB1 | PVB1 | PVB1 | PVB1 | PVB1 | PVB1 | PVB1 | PVB1 |
| | Parts by weight | 100 | 100 | 100 | 100 | 100 | 100 | 100 | 100 | 100 | 100 | 100 | 100 |
| Plasticizer | Sort | 3GO | 3GO | 3GO | 3GO | 3GO | 3GO | 3GO | 3GO | 3GO | 3GO | 3GO | 3GO |
| | Parts by weight | 40 | 40 | 40 | 40 | 40 | 40 | 40 | 40 | 40 | 40 | 40 | 40 |
| Heat shielding particles | Kind | ITO | ITO | ITO | ITO | ITO | ITO | ITO | ITO | - | - | - | - |
| Amount of ITO/wt% | % by weight | 0.15 | 0.6 | 0.15 | 0.15 | 0.3 | 0.15 | 0.15 | 0.15 | - | - | - | - |
| Metal salt | Sort | - | - | - | - | - | - | - | - | - | - | Mg acetate | - |
| | Mg•ppm | - | - | - | - | - | - | - | - | - | - | 30 | - |
| Phosphorus compound | Kind 1 | A208B | A208B | A208B | A219B | A219B | A219B | A208B | A212C | A208F | A208B | A208B | A208B |
| | % by weight | 0.7 | 0.7 | 3.5 | 0.7 | 0.7 | 3.5 | 0.35 | 0.7 | 0.7 | 0.7 | 0.7 | 1 |
| | Kind 2 | - | - | - | - | - | - | A219B | - | - | - | - | - |
| | % by weight | - | - | - | - | - | - | 0.35 | - | - | - | - | - |
| | P•ppm | 390 | 390 | 1900 | 110 | 110 | 555 | 250 | 250 | 420 | 390 | 390 | 550 |
| Silane compound | Kind | - | - | - | - | - | - | - | - | - | - | - | - |
| | % by weight | - | - | - | - | - | - | - | - | - | - | - | - |
| | Si•ppm | - | - | - | - | - | - | - | - | - | - | - | - |
| Haze value | | ○○ | ○ | ○○ | ○○ | ○ | ○○ | ○○ | ○○ | ○ | ○ | ○ | ○ |
| Releasability of glass | | ○ | ○ | ○○ | ○ | ○ | ○○ | ○ | ○ | ○ | ○ | ○○ | ○ |

**[Table 2]**

| | | Reference Example 13 | Reference Example 14 | Reference Example 15 | Example 16 | Example 17 | Example 18 | Example 19 | Example 20 | Reference Example 21 | Example 22 | Example 23 |
|---|---|---|---|---|---|---|---|---|---|---|---|---|
| Polyvinyl acetal resin | Kind | PVB1 | PVB1 | PVB1 | PVB1 | PVB1 | PVB1 | PVB1 | PVB1 | PVB1 | PVB1 | PVB1 |
| | Parts by weight | 100 | 100 | 100 | 100 | 100 | 100 | 100 | 100 | 100 | 100 | 100 |
| Plasticizer | Sort | 3GO | 3GO | 3GO | 3GO | 3GO | 3GO | 3GO | 3GO | 3GO | 3GO | 3GO |
| | Parts by weight | 40 | 40 | 40 | 40 | 40 | 40 | 40 | 40 | 40 | 40 | 26 |
| Heat shielding particles | Kind | - | - | - | ATO | ITO | ITO | ITO | ITO | - | ITO | ITO |
| Amount of ITO/wt% | % by weight | - | - | - | 0.15 | 0.15 | 0.15 | 0.15 | 0.15 | - | 0.15 | 0.15 |
| Metal salt | Sort | - | - | - | - | - | - | - | - | - | - | - |
| | Mg·ppm | - | - | - | - | - | - | - | - | - | - | - |
| Phosphorus compound | Kind 1 | A219B | A212C | A208F | A208B | - | - | - | - | - | A208B | - |
| | % by weight | 0.7 | 0.7 | 0.7 | 0.7 | - | - | - | - | - | 0.35 | - |
| | Kind 2 | - | - | - | - | - | - | - | - | - | - | - |
| | % by weight | - | - | - | - | - | - | - | - | - | - | - |
| | P•ppm | 110 | 250 | 420 | 390 | - | - | - | - | - | 190 | - |
| Silane compound | Kind | - | - | - | - | PG1190 | PG1190 | PG1190 | PG1190 | PG1190 | PG1190 | PG1190 |
| | % by weight | - | - | - | - | 0.5 | 2 | 4 | 10 | 2 | 0.15 | 10 |
| | Si•ppm | - | - | - | - | 290 | 1100 | 2000 | 5000 | 1100 | 900 | 5500 |
| Haze value | | ○ | ○ | ○ | ○ | ○○ | ○○ | ○○ | ○○ | ○ | ○○ | ○○ |
| Releasability of glass | | ○ | ○ | ○ | ○ | ○ | ○ | ○○ | ○○ | ○ | ○ | ○○ |

**[Table 3]**

| | | Comparative Example 1 | Comparative Example 2 | Comparative Example 3 | Comparative Example 4 | Comparative Example 5 |
|---|---|---|---|---|---|---|
| Polyvinyl acetal resin | Kind | PVB1 | PVB1 | PVB1 | PVB1 | PVB1 |
| | Parts by weight | 100 | 100 | 100 | 100 | 100 |
| Plasticizer | Sort | 3GO | 3GO | 3GO | 3GO | 3GO |
| | Parts by weight | 40 | 40 | 40 | 40 | 40 |
| Heat shielding particles | Kind | ITO | ITO | ITO | ITO | ITO |
| | % by weight | 0.15 | 0.15 | 0.15 | 0.15 | 0.15 |
| Metal salt | Sort | Mg acetate | - | - | - | - |
| | Mg·ppm | 30 | - | - | - | - |
| Phosphorus compound | Kind 1 | - | Dibutyl phosphate | Tributyl phosphate | Tris (2-ethylhexyl) phosphate | PEG |
| | % by weight | - | 0.5 | 0.5 | 0.5 | 5 |
| | Kind 2 | - | - | - | - | - |
| | % by weight | - | - | - | - | - |
| | P•ppm | - | 740 | 580 | 370 | 0 |
| Silane compound | Kind | - | - | - | - | - |
| | % by weight | - | - | - | - | - |
| | Si•ppm | 10 | 10 | 10 | 10 | 10 |
| Haze value | | × | ○ | ○ | ○ | ○ |
| Releasability of glass | | ○ | × | × | × | × |

**[Table 4]**

| | | | Example 24 | Example 25 | Example 26 | Example 27 | Example 28 | Example 29 | Comparative Example 6 |
|---|---|---|---|---|---|---|---|---|---|
| Composition for forming first and third layers | Polyvinyl acetal resin | Kind | PVB1 | PVB1 | PVB1 | PVB1 | PVB1 | PVB1 | PVB1 |
| | | Parts by weight | 100 | 100 | 100 | 100 | 100 | 100 | 100 |
| | Plasticizer | Sort | 3GO | 3GO | 3GO | 3GO | 3GO | 3GO | 3GO |
| | | Parts by weight | 40 | 40 | 40 | 40 | 40 | 40 | 40 |
| | Heat shielding particles | Kind | ITO | ITO | ITO | - | Carbon black | Carbon black | Carbon black |
| | Amount of ITO/wt% | % by weight | 0.16 | 0.15 | 0.15 | - | - | - | - |
| | Amount of carbon black/wt% | % by weight | - | - | - | - | 0.02 | 0.15 | 0.15 |
| | Metal salt | Sort | - | - | - | - | - | - | - |
| | | Mg·ppm | - | - | - | - | - | - | - |
| | Phosphorus compound | Kind 1 | A208B | A208B | A208B | A208B | A208B | A208B | Dibutyl phosphate |
| | | % by weight | 0.7 | 0.7 | 0.7 | 0.7 | 0.7 | 0.7 | 0.27 |
| | | Kind 2 | - | - | - | - | - | - | - |
| | | % by weight | - | - | - | - | - | - | - |
| | | P•ppm | 390 | 390 | 390 | 390 | 390 | 390 | 390 |
| | Silane compound | Kind | - | - | - | - | - | - | - |
| | | % by weight | - | - | - | - | - | - | - |
| | | Si•ppm | - | - | - | - | - | - | - |
| Composition for forming second layer | Polyvinyl acetal resin | Kind | PVB2 | PVB2 | PVB2 | PVB2 | PVB2 | PVB2 | PVB2 |
| | | Parts by weight | 100 | 100 | 100 | 100 | 100 | 100 | 100 |
| | Plasticizer | Sort | 3GO | 3GO | 3GO | 3GO | 3GO | 3GO | 3GO |
| | | Parts by weight | 60 | 60 | 60 | 60 | 60 | 60 | 60 |
| | Heat shielding particles | Kind | - | ITO | ITO | ITO | - | - | - |
| | Amount of ITO/wt% | % by weight | - | 0.01 | 1 | 1 | - | - | - |
| | Metal salt | Sort | - | - | - | - | - | - | - |
| | | Mg·ppm | - | - | - | - | - | - | - |
| | Phosphorus compound | Kind 1 | - | A208B | A208B | A208B | - | - | - |
| | | % by weight | - | 0.7 | 3 | 0.7 | - | - | - |
| | | Kind 2 | - | - | - | - | - | - | - |
| | | % by weight | - | - | - | - | - | - | - |
| | | P•ppm | - | 390 | 1670 | 390 | - | - | - |
| | Silane compound | Kind | - | - | - | - | - | - | - |
| | | % by weight | - | - | - | - | - | - | - |
| | | Si•ppm | - | - | - | - | - | - | - |
| configuration of film | | - | First layer 350 µm/ Second layer 100 µm/Third layer 350 µm | First layer 350 µm/ Second layer 100 µm/Third layer 350 µm | First layer 350 µm/ Second layer 100 µm/Third layer 350 µm | First layer 350 µm/ Second layer 100 µm/Third layer 350 µm | First layer 350 µm/ Second layer 100 µm/Third layer 350 µm | First layer 350 µm/ Second layer 100 µm/Third layer 350 µm | First layer 350 µm/ Second layer 100 µm/Third layer 350 µm |
| Haze value | | | ○○ | ○○ | Δ | Δ | ○○ | Δ | × |
| Releasability of glass | | | ○ | ○○ | ○○ | ○○ | ○ | ○ | × |

In this connection, Reference Examples in which respective interlayer films contain no heat shielding particles were shown, and the interlayer films in Reference Examples were determined to be low in the heat shielding properties as compared with interlayer films in Examples.

In this connection, specific examples of a single-layered interlayer film composed only of a first layer were shown. It was confirmed that, by providing an interlayer film with the configuration of the present invention, effects of the present invention were attained even in the cases of two-layered and three-layered interlayer films by virtue of the first layer. For example, with regard to two interlayer films being the same as each other in the content of P (the phosphorus atom) or the content of Si (the silicon atom), one interlayer film in which a phosphorus compound having a polyoxyalkylene group or a silane compound having a polyoxyalkylene group is used can be made high in the releasability of a lamination glass member from the interlayer film as compared with the other interlayer film in which another phosphorus compound or another silane compound is used.

### EXPLANATION OF SYMBOLS

- 1:: First layer
- 1a:: Outer surface
- 2:: Second layer
- 2a:: First surface
- 2b:: Second surface
- 3:: Third layer
- 3a:: Outer surface
- 11:: Interlayer film
- 11A:: Interlayer film (first layer)
- 11a:: First surface
- 11b:: Second surface
- 21:: First glass plate
- 22:: Second glass plate
- 31:: Laminated glass
- 31A:: Laminated glass

## Claims

1. An interlayer film for laminated glass, being a single-layered interlayer film provided with only a first layer or being a multi-layered interlayer film provided with a first layer and another layer,
the first layer containing no magnesium or containing magnesium in a content of 50 ppm or less and the first layer containing a phosphorus compound having a polyoxyalkylene group or a silane compound having a polyoxyalkylene group,
the first layer containing heat shielding particles in the case of the single-layered interlayer film provided with only the first layer, and
at least one layer in the multi-layered interlayer film containing heat shielding particles in the case of the multi-layered interlayer film provided with the first layer and another layer.

2. The interlayer film for laminated glass according to claim 1, wherein the first layer contains heat shielding particles.

3. The interlayer film for laminated glass according to claim 1 or 2, wherein the first layer contains no alkali metal or contains an alkali metal in a content of 1000 ppm or less.

4. The interlayer film for laminated glass according to any one of claims 1 to 3, wherein the first layer contains a thermoplastic resin.

5. The interlayer film for laminated glass according to any one of claims 1 to 4, wherein the thermoplastic resin contained in the first layer is a polyvinyl acetal resin.

6. The interlayer film for laminated glass according to any one of claims 1 to 5, wherein the first layer contains a plasticizer.

7. The interlayer film for laminated glass according to any one of claims 1 to 6, wherein the phosphorus compound having a polyoxyalkylene group is a phosphorus compound having a polyoxyalkylene group and an alkyl group bonded to a polyoxyalkylene group or the silane compound having a polyoxyalkylene group is a silane compound having a polyoxyalkylene group and an alkyl group bonded to a polyoxyalkylene group.

8. The interlayer film for laminated glass according to any one of claims 1 to 7, wherein the phosphorus compound having a polyoxyalkylene group is a phosphoric acid ester having a polyoxyalkylene group.

9. The interlayer film for laminated glass according to any one of claims 1 to 8, wherein the silane compound having a polyoxyalkylene group is a silsesquioxane having a polyoxyalkylene group.

10. The interlayer film for laminated glass according to any one of claims 1 to 9, wherein the first layer contains a phosphorus compound having the polyoxyalkylene group.

11. The interlayer film for laminated glass according to any one of claims 1 to 10, being provided with the first layer as a surface layer of the interlayer film.

12. The interlayer film for laminated glass according to any one of claims 1 to 11, being an interlayer film for laminated glass having a two or more-layer structure and being further provided with a second layer containing a thermoplastic resin,
the first layer being arranged on a first surface side of the second layer.

13. The interlayer film for laminated glass according to claim 12, being an interlayer film for laminated glass having a three or more-layer structure and being further provided with a third layer containing a thermoplastic resin,
the third layer being arranged on a second surface side opposite to the first surface side of the second layer.

14. Laminated glass, comprising:
a first lamination glass member;
a second lamination glass member; and
the interlayer film for laminated glass according to any one of claims 1 to 13,
the interlayer film for laminated glass being arranged between the first lamination glass member and the second lamination glass member.
